# EUROPÄISCHE PATENTSCHRIFT

(11) **EP 0 705 732 B1**
(45) Veröffentlichungstag und Bekanntmachung des Hinweises auf die Patenterteilung: **30.06.1999**
(21) Anmeldenummer: 95115759.3
(22) Anmeldetag: 06.10.1995
(51) Int. Cl.: B60Q 7/00

(54) **Warndreieck**
Warning triangle
Triangle de signalisation

(30) Priorität: 08.10.1994 DE 9416249 U; 29.03.1995 DE 29505194 U
(43) Veröffentlichungstag der Anmeldung: 10.04.1996
(73) Patentinhaber: Lutzenberger, Helmut, 38500 Güimar (Teneriffa) (ES); Rädler, Thomas, 88167 Stiefenhofen (DE); BURGER SÖHNE GmbH + Co., D-71065 Sindelfingen (DE)
(72) Erfinder: Rädler, Thomas, D-88167 Stiefenhofen (DE); Lutzenberger, Helmut, E-38500 Güimar, Tenerife (ES)
(74) Vertreter: Lasch, Hartmut Dipl.-Ing.

(56) Entgegenhaltungen:
- DE-C- 4 238 180
- DE-U- 9 214 680

## Beschreibung

Die Erfindung betrifft ein Warndreieck gemäß dem Oberbegriff des Patentanspruchs 1. Ein derartiges Warndreieck ist z.B. aus der DE-C- 42 38 180 bekannt.

Seit langer Zeit ist es bekannt, in einem Kraftfahrzeug ein Warndreieck mitzuführen, das im Bedarfsfall aufgestellt werden kann. Aus Platzgründen sind Warndreiecke entwickelt worden, die sich bei Nicht-Gebrauch auseinanderbauen bzw. zusammenklappen und in einer relativ kleinen Kiste verstauen lassen. Es hat sich jedoch als aufwendig und mühselig erwiesen, das Warndreieck aus den Einzelteilen aufzurichten, wobei es insbesondere bei technisch weniger begabten Benutzern lange dauern kann, bis das Warndreieck zusammengebaut ist und seine Warnfunktion für andere Verkehrsteilnehmer wahrnehmen kann.

Um den Zusammenbau des Warndreieckes zu vermeiden, ist es bekannt, dieses in aufgerichtetem Zustand auf der Innenseite des Kofferraumdeckels eines Kraftfahrzeugs lösbar anzubringen. Ein Benutzer muß das Warndreieck im Bedarfsfall lediglich aus der Halterung entnehmen und nach Gebrauch wieder in diese einsetzen. Damit ist der weitere Vorteil verbunden, daß das Warndreieck bereits beim Öffnen des Kofferraums eine Warnfunktion gegenüber anderen Verkehrsteilnehmern ausübt. Jedoch sind die Einsatzmöglichkeiten derartiger Warndreiecke dadurch beschränkt, daß sie relativ große Abmessungen des Kofferraumdeckels erfordern, um an diesem befestigt werden zu können. Derartige Abmessungen von Kofferraumdeckeln sind üblicherweise jedoch nur bei Großlimousinen vorhanden.

Um das Warndreieck auch bei Kraftfahrzeugen mit geringeren Abmessungen des Kofferraumdeckels auf dessen Innenseite anbringen zu können, sind Warndreiecke entwickelt worden (DE-C- 40 19 063 ), die aus einigen wenigen, insbesondere zwei Tafelabschnitten bestehen, die relativ zueinander schwenkbar sind, so daß sie in ihrer Nicht-Gebrauchsstellung eine gegenüber ihrer Gebrauchsstellung verringerte Höhe aufweisen. Nach Entnahme aus der Halterung im Kofferraumdeckel kann der Benutzer das Warndreieck durch Schwenken eines der beiden Tafelabschnitte in einfacher Weise aufrichten. Im zusammengelegten Zustand besitzt das Warndreieck zwar noch eine ausreichende Reflektionsfläche, die geometrische Form weicht jedoch wesentlich von der eines Dreiecks ab. Eine Dreieckform besitzt aber für die Verkehrsteilnehmer eine hohe Warnfunktion, die bei dem bekannten Warndreieck in zusammengelegten Zustand nur in eingeschränktem Maße vorhanden ist.

Der Erfindung liegt die Aufgabe zugrunde, ein Warndreieck der eingangs genannten Art zu schaffen, bei dem auch im zusammengelegten Zustand eine dreieckige Konfiguration gegeben ist.

Diese Aufgabe wird erfindungsgemäß durch ein Warndreieck gelöst, das ein Basisteil, das über Füße auf einer Stellfläche abstützbar ist, und zwei Schenkel aufweist, die jeweils ein unteres Schenkelteil, das an seinem unteren Ende mit dem Basisteil verbunden ist, und ein oberes Schenkelteil aufweisen, das mit dem zugeordneten unteren Schenkelteil über ein Schenkelgelenk gelenkig verbunden ist. Die beiden oberen Schenkelteile sind nahe ihrem oberen Ende über ein Scheitelgelenk gelenkig miteinander verbunden, so daß sie zwischen einer aufgerichteten Stellung, in der das Scheitelgelenk oberhalb der Schenkelgelenke angeordnet ist, und einer unteren, zusammengelegten Stellung verstellbar sind, in der das Scheitelgelenk unterhalb der Schenkelgelenke im Bereich des Basisteils angeordnet ist.

Die beiden oberen Schenkelteile bilden auf diese Weise eine Art Kniehebel, der zwischen zwei Stellungen verstellbar ist. In einer oberen Stellung sind die oberen Schenkelteile mit den zugeordneten unteren Schenkelteilen jeweils ausgerichtet, so daß sie zusammen mit diesen jeweils einen Schenkel des Warndreiecks bilden. Um das Warndreieck zusammenzulegen, wird auf den Scheitel eine nach unten gerichtete Druckkraft ausgeübt, wodurch die oberen Schenkelteile um die Schenkelgelenke und das sie gemeinsam verbindende Scheitelgelenk schwenken und in Art eines Kniehebels eine untere Stellung einnehmen, in der das Scheitelgelenk unterhalb der Schenkelgelenke liegt. Die senkrecht zur Bewegungsrichtung notwendige Bewegungsmöglichkeit während der Verstellbewegung wird in bekannter Weise durch Kulissenführungen, Langlöcher oder ähnliches erreicht. Dabei können die unteren Enden der unteren Schenkelteile fest mit dem Basisteil verbunden sein. Alternativ ist es auch möglich, daß zumindest eines der unteren Schenkelteile am unteren Ende über ein Basisgelenk gelenkig mit dem Basisteil verbunden ist, so daß es bei der Verstellbewegung in Art eines doppelgelenkigen Pendelstabes seitlich ausweichen kann.

Alternativ oder zusätzlich dazu kann vorgesehen sein, daß das Scheitelgelenk neben einer Verdrehung der beiden oberen Schenkelteile auch deren gegenseitige Verschiebung zuläßt. Dies kann beispielsweise dadurch erreicht werden, daß das Scheitelgelenk von einem in einer Kulisse verschiebbar geführten Gelenkstift gebildet ist, wobei die Kulisse in einem der oberen Schenkelteile ausgebildet ist.

Wenn in bevorzugter Ausgestaltung der Erfindung das untere und das obere Schenkelteil eine im wesentlichen gleiche Länge aufweisen, d.h. die Schenkelgelenke in etwa der Mitte der Schenkel angeordnet sind, kommt das Scheitelgelenk im zusammengelegten Zustand des Warndreiecks im Mittelbereich des Basisteils zu liegen. Dabei bildet jeweils ein unteres Schenkelteil mit dem zugeordneten oberen Schenkelteil und einem halben Basisteil ein im wesentlichen gleichseitiges Dreieck, so daß das Warndreieck im zusammengelegten Zustand die Form zweier nebeneinander angeordneter kleiner Warndreiecke besitzt. Auf diese Weise bringt das Warndreieck auch im zusammengelegten Zustand eine hohe Warnfunktion mit sich.

Die Ausübung der für die Verstellung notwendigen Kraft kann vom Benutzer in einfacher Weise erreicht werden, wenn in Weiterbildung der Erfindung in oder nahe dem Scheitel des Warndreiecks eine Handhabe, beispielsweise in Form einer Lasche angeordnet ist. Vorzugsweise ist die Handhabe mit einer Eingriffsöffnung versehen, wodurch die Aufbringung einer Zugkraft zur Aufrichtung des Warndreiecks erleichtert ist. Darüber hinaus kann die Eingriffsöffnung zum Tragen des aufgerichteten Warndreieckes dienen.

Um den für das Warndreieck im zusammengelegten Zustand benötigten Bauraum noch weiter zu verringern, kann in Weiterbildung der Erfindung vorgesehen sein, daß das Basisteil ein Mittelgelenk aufweist, um das es zusammenklappbar ist. Die im zusammengelegten Zustand gebildeten, nebeneinander angeordneten gleichschenkeligen Warndreiecke können durch Schwenkung um das Mittelgelenk des Basisteils in Deckung miteinander gebracht werden, so daß die Konfiguration eines einzelnen kleinen Warndreiecks erreicht ist.

Um für das Warndreieck im aufgestellten Zustand eine möglichst hohe Stabilität zu erreichen, kann vorgesehen sein, daß den Schenkelgelenken und gegebenenfalls auch dem Scheitelgelenk und dem Basisgelenk eine Rastvorrichtung zugeordnet ist. Um das Warndreieck aus der aufgerichteten Stellung in die zusammengelegte Stellung zu bringen, muß somit der Benutzer zuerst die Rastkräfte überwinden. Alternativ oder zusätzlich dazu können weitere form- und/oder kraftschlüssige Haltevorrichtungen für das Warndreieck im aufgerichtetem Zustand vorgesehen sein.

Weitere Einzelheiten und Merkmale der Erfindung sind aus der folgenden Beschreibung eines Ausführungsbeispiels unter Bezugnahme auf die Zeichnung ersichtlich. Es zeigen:
- Figur 1:: ein Warndreieck in aufgerichteter Stellung,
- Figur 2:: das Warndreieck in zusammengelegter Stellung,
- Figur 3:: das zusammengelegte Warndreieck im Kofferraumdeckel eines Kraftfahrzeugs und
- Figur 4A,4B,4C:: die einzelnen Phasen des Zusammenlegens eines Warndreiecks gemäß einer weiteren Ausführungsform.

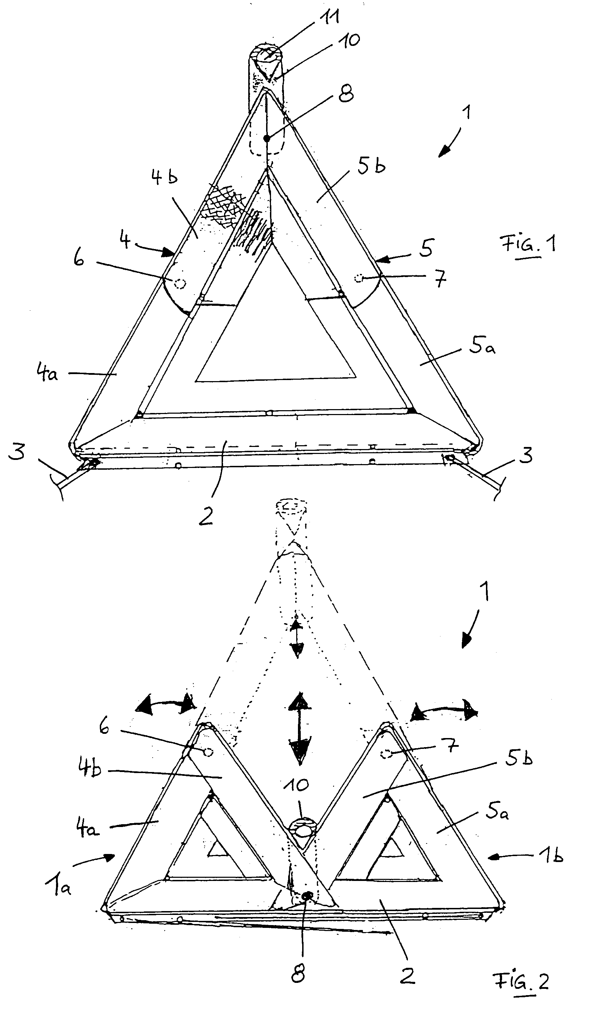

Gemäß Figur 1 besitzt ein gleichseitiges Warndreieck 1 ein unteres Basisteil 2, das über nicht näher dargestellte Füße 3, die schwenkbar am Basisteil 2 angebracht sind, auf einer Stellfläche, insbesondere dem Erdboden abstützbar ist. Die beiden oberen Schenkel 4 und 5 des Warndreiecks bestehen jeweils aus einem unteren Schenkelteil 4a bzw. 5a und einem oberen Schenkelteil 4b und 5b, die mit einer reflektierenden und/oder fluoreszierenden Oberfläche ausgestaltet sein können. Die unteren Schenkelteile 4a und 5a sind an ihrem unteren Ende fest mit dem Basisteil 2 unter einem Winkel von 60° verbunden. An ihrem oberen Ende sind die unteren Schenkelteile 4a und 5a über ein Schenkelgelenk 6 bzw. 7 jeweils mit dem unteren Ende der zugeordneten oberen Schenkelteile 4b bzw. 5b verbunden. Die beiden oberen Schenkelteile 4b und 5b sind wiederum an ihrem oberen Ende über ein Scheitelgelenk 8 gelenkig verbunden, an dem des weiteren eine nach oben vorstehende Lasche 10 angeschlossen ist, die eine Eingriffsöffnung 11 besitzt. Die Lasche 10 dient als Handhabe für einen Benutzer.

Figur 1 zeigt das Warndreieck 1 in aufgerichtetem Zustand, wobei die unteren Schenkelteile 4a bzw. 5a mit den zugeordneten oberen Schenkelteilen 4b bzw. 5b geradlinig ausgerichtet sind und die oberen Schenkel 4 bzw. 5 des Warndreiecks 1 bilden. Um das Warndreieck 1 zusammenzulegen, übt ein Benutzer auf die Lasche 10 eine gemäß Figur 1 nach unten gerichtete Druckkraft auf, wodurch die oberen Schenkelteile 4b bzw. 5b an ihrem unteren Ende infolge einer nicht dargestellten Kulissenführung seitlich ausweichen und/oder das Scheitelgelenk 8 neben einer Verdrehung auch eine Verschiebung der oberen Schenkelteile 4b, 5b zuläßt, so daß der Scheitel des Warndreiecks 1 in der Art eines Kniehebels nach unten bewegt wird, bis die in Figur 2 dargestellte zusammengelegte Stellung erreicht ist, in der das Scheitelgelenk 8 im Bereich des Basisteils 2 angeordnet ist. In der zusammengelegten Stellung sind somit zwei nebeneinander angeordnete kleine Warndreiecke 1a und 1b gebildet, deren Schenkel jeweils von einem unteren Schenkelteil 4a bzw. 5a, einem oberen Schenkelteil 4b bzw. 5b und der Hälfte des Basisteils 2 gebildet ist.

Um das Warndreieck 1 aus der in Figur 2 gezeigten Stellung wieder aufzurichten, greift der Benutzer in die Eingriffsöffnung 11 der Handhabe 10 und zieht das Scheitelgelenk nach oben, bis die oberen Schenkelteile 4b und 5b die in Figur 1 gezeigte, zu den unteren Schenkelteilen 4a bzw. 5a linear ausgerichtete Stellung erreichen, in der sie verrasten.

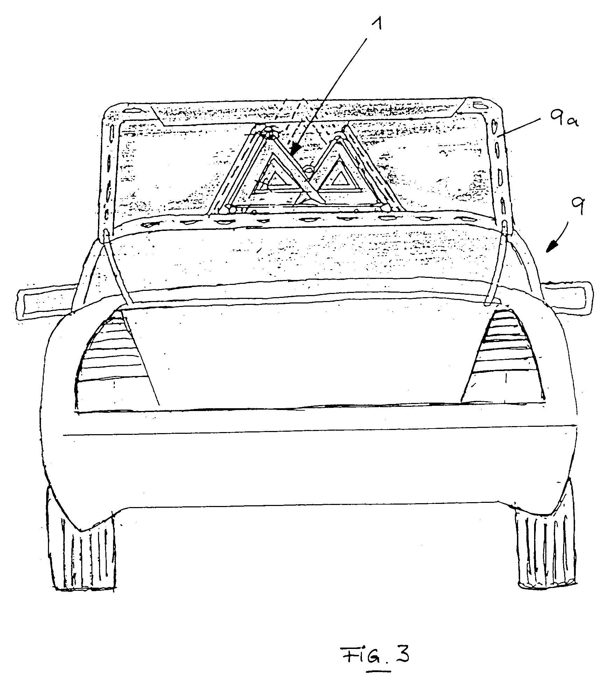

Figur 3 zeigt die Aufnahme des zusammengelegten Warndreiecks 1 auf der Innenseite des Kofferraumdeckels 9a eines Kraftfahrzeuges 9. Vorzugsweise ist das Warndreieck 1 über eine leicht lösbare Klemm- oder Rastverbindung im Kofferraumdeckel 9a gehalten und kann von diesem in einfacher Weise abgenommen werden. Dabei kann vorgesehen sein, daß auf der Innenseite des Kofferraumdeckels unterhalb des eingesetzten Warndreieckes eine reflektierende Folie oder ein entsprechender Anstrich vorgesehen sind. Auf diese Weise kann der Kofferraumdeckel auch dann eine Warn- und Hinweisfunktion für andere Verkehrsteilnehmer ausüben, wenn das Warndreieck herausgenommen und in bekannter Weise in aufgerichtetem Zustand auf der Straße plaziert ist. Alternativ kann das zusammengelegte Warndreieck auch auf der Hutablage eines Kfz plaziert werden.

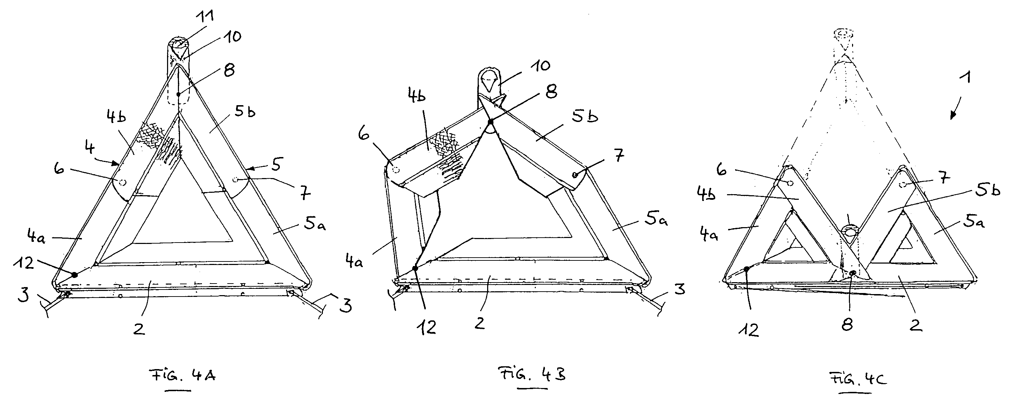

In den Figuren 4A, 4B und 4C sind die einzelnen Phasen des Zusammenlegens eines Warndreiecks gemäß einem weiteren Ausführungsbeispiel dargestellt, wobei die mit dem ersten Ausführungsbeispiel übereinstimmenden Bauteile mit entsprechenden Bezugszeichen versehen sind. Das in den Figuren 4A bis 4C dargestellte zweite Ausführungsbeispiel unterscheidet sich von dem ersten Ausführungsbeispiel dadurch, daß das linke untere Schenkelteil 4a an seinem unteren Ende nicht fest mit dem Basisteil 2 verbunden, sondern über ein Basisgelenk 12 gelenkig angeschlossen ist. Wenn ein Benutzer zum Zusammenlegen des Warndreiecks auf die Handhabe 10 in der in Figur 4A gezeigten Stellung eine Druckkraft ausübt, weicht das Schenkelgelenk 6 des linken Schenkels 4 seitlich nach außen aus, indem das obere Schenkelteil 4b um das Scheitelgelenk 8 und das untere Schenkelteil 4a um das Basisgelenk 12 schwenken. Durch das seitliche Ausweichen des Schenkelgelenkes 6 (siehe Figur 4B) kann das Scheitelgelenk 8 in die untere Stellung gebracht werden (siehe 4C), in der es am Basisteil angeordnet ist.

Alternativ zu der in Figur 4A bis 4C gezeigten Ausführungsform kann auch das untere Schenkelteil 5a des anderen Schenkels 5 ebenfalls gelenkig am Basisteil angeschlossen sein.

## Patentansprüche

1. Warndreieck, insbesondere für Kraftfahrzeuge, mit einem Basisteil (2), das über Füße (3) auf einer Stellfläche abstützbar ist, und zwei Schenkeln (4, 5), die jeweils ein unteres Schenkelteil (4a,5a), das an seinem unteren Ende mit dem Basisteil (2) verbunden ist, und ein oberes Schenkelteil (4b,5b) aufweisen, das mit dem zugeordneten unteren Schenkelteil (4a,5a) über ein Schenkelgelenk (6,7) gelenkig verbunden ist, wobei die beiden oberen Schenkelteile (4b,5b) nahe ihrem oberen Ende über ein Scheitelgelenk (8) gelenkig miteinander verbunden sind, so daß die oberen Schenkelteile (4b,5b) zwischen einer aufgerichteten Stellung, in der das Scheitelgelenk (8) oberhalb der Schenkelgelenke (6,7) angeordnet ist und einer unteren, zusammengelegten Stellung verstellbar sind, dadurch gekennzeichnet, daß das Scheitelgelenk (8) in seiner unteren stellung unterhalb der Schenkelgelenke (6,7) im Bereich des Basisteils (2) angeordnet ist.

2. Warndreieck nach Anspruch 1, dadurch gekennzeichnet, daß zumindest eines der unteren Schenkelteile (4a,5a) am unteren Ende über ein Basisgelenk (12) gelenkig am Basisteil (2) angeschlossen ist.

3. Warndreieck nach Anspruch 2, dadurch gekennzeichnet, daß beide unteren Schenkelteile (4a,5a) am Basisteil (2) gelenkig angeschlossen sind.

4. Warndreieck nach Anspruch 1, dadurch gekennzeichnet, daß die unteren Schenkelteile (4a,5a) fest am Basisteil (2) angeschlossen sind.

5. Warndreieck nach einem der Ansprüche 1 bis 4, dadurch gekennzeichnet, daß das Scheitelgelenk (8) von einem in einer Kulisse verschiebbar geführten Gelenkstift gebildet ist.

6. Warndreieck nach einem der Ansprüche 1 bis 5, dadurch gekennzeichnet, daß das untere (4a,5a) und das obere Schenkelteil (4b,5b) eine im wesentlichen gleiche Länge aufweisen.

7. Warndreieck nach einem der Ansprüche 1 bis 6, dadurch gekennzeichnet, daß in oder nahe dem Scheitel des Warndreiecks (1) eine Handhabe (10) angeordnet ist.

8. Warndreieck nach Anspruch 7, dadurch gekennzeichnet, daß die Handhabe (10) mit einer Eingriffsöffnung (11) versehen ist.

9. Warndreieck nach einem der Ansprüche 1 bis 8, dadurch gekennzeichnet, daß das Basisteil (2) ein Mittelgelenk aufweist, um das es zusammenklappbar ist.

10. Warndreieck nach einem der Ansprüche 1 bis 9, dadurch gekennzeichnet, daß den Schenkelgelenken (6,7) und/oder dem Scheitelgelenk (8) eine Rastvorrichtung zugeordnet ist.

## Claims

1. Warning triangle, particularly for motor vehicles, having a base part (2), which can be supported by means of feet (3) on a standing surface, and two legs (4, 5), which in each case have a lower leg part (4a, 5a), which is connected at its lower end to the base part (2), and an upper leg part (4b, 5b), which is linked by means of a leg joint (6, 7) to the associated, lower leg part (4a, 5a), the two upper leg parts (4b, 5b) being linked together by means of a top joint (8) close to the upper end thereof, so that the upper leg parts (4b, 5b) are adjustable between a raised position, in which the top joint (8) is located above the leg joints (6, 7) and a lower, collapsed position, characterized in that the top joint (8), in its lower position, is located below the leg joints (6, 7) in the area of the base part (2).

2. Warning triangle according to claim 1, characterized in that at least one of the lower leg parts (4a, 5a), at the lower end, is linked by means of a base joint (12) with the base part (2).

3. Warning triangle according to claim 2, characterized in that both lower leg parts (4a, 5a) are linked to the base part (2).

4. Warning triangle according to claim 1, characterized in that the lower leg parts (4a, 5a) are fixed to the base part (2).

5. Warning triangle according to one of the claims 1 to 4, characterized in that the top joint (8) is formed by a wrist pin displaceably guided in a connecting link.

6. Warning triangle according to one of the claims 1 to 5, characterized in that the lower leg part (4a, 5a) and the upper leg part (4b, 5b) have substantially the same length.

7. Warning triangle according to one of the claims 1 to 6, characterized in that a handle (10) is located in or close to the top of the warning triangle (1).

8. Warning triangle according to claim 7, characterized in that the handle (10) is provided with an engagement opening (11).

9. Warning triangle according to one of the claims 1 to 8, characterized in that the base part (2) has a central joint about which it is collapsible.

10. Warning triangle according to one of the claims 1 to 9, characterized in that a locking device is associated with the leg joints (6, 7) and/or the top joint (8).

## Revendications

1. Triangle de signalisation, en particulier pour véhicules à moteur, comprenant une pièce de base (2) pouvant être portée en un endroit de stationnement par des pieds (3), et deux branches (4,5) présentant chacune une partie inférieure (4a,5a) de branche reliée à son extrémité inférieure à la pièce de base (2) et une partie supérieure (4b,5b) de branche reliée articulée à la partie inférieure (4a,5a) de branche correspondante par une articulation de branche (6,7), les deux parties supérieures (4b,5b) de branche étant reliées articulées entre elles à proximité de leur extrémité supérieure par une articulation de sommet (8), de sorte que les parties supérieures (4b,5b) de branche sont déplaçables d'une position érigée, dans laquelle l'articulation de sommet (8) est disposée au-dessus des articulations de branche (6,7) dans une position inférieure repliée, caractérisé en ce que l'articulation de sommet (8) est disposée dans sa position inférieure en-dessous des articulations de branche (6,7), dans la zone de la pièce de base (2).

2. Triangle de signalisation selon la revendication 1, caractérisé en ce qu'au moins une des parties inférieures (4a,5a) de branche est reliée articulée à son extrémité inférieure à la pièce de base (2) par une articulation de base (12).

3. Triangle de signalisation selon la revendication 2, caractérisé en ce que les deux parties inférieures (4a,5a) de branche sont reliées articulées à la pièce de base (2).

4. Triangle de signalisation selon la revendication 1, caractérisé en ce que les parties inférieures (4a,5a) de branche sont reliées fixes à la pièce de base (2).

5. Triangle de signalisation selon l'une quelconque des revendications 1 à 4, caractérisé en ce que l'articulation de branche (8) est constituée par un pivot d'articulation guidé déplaçable dans une coulisse.

6. Triangle de signalisation selon l'une quelconque des revendications 1 à 5, caractérisé en ce que la partie inférieure (4a,5a) et la partie supérieure (4b,5b) de branche présentent une longueur sensiblement égale.

7. Triangle de signalisation selon l'une quelconque des revendications 1 à 6, caractérisé en ce qu'une poignée (10) est disposée au sommet ou au voisinage du sommet du triangle (1).

8. Triangle de signalisation selon la revendication 7, caractérisé en ce que la poignée (10) présente une ouverture d'encliquetage (11).

9. Triangle de signalisation selon l'une quelconque des revendications 1 à 8, caractérisé en ce que la pièce de base (2) présente une articulation médiane autour de laquelle elle est repliable.

10. Triangle de signalisation selon l'une quelconque des revendications 1 à 9, caractérisé en ce qu'un dispositif à crans est prévu pour les articulations (6,7) de branche et/ou l'articulation (8) de sommet.
